Europäisches Patentamt

European Patent Office

Office européen des brevets

(11) Veröffentlichungsnummer: **0 386 629**
**A1**

## (12) EUROPÄISCHE PATENTANMELDUNG

(21) Anmeldenummer: 90103994.1

(22) Anmeldetag: 01.03.90

(51) Int. Cl.⁵: **A01B 35/22**

(30) Priorität: 07.03.89 DE 3907197

(43) Veröffentlichungstag der Anmeldung:
**12.09.90 Patentblatt 90/37**

(84) Benannte Vertragsstaaten:
**AT DE FR GB IT NL**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Gattermann, Bernd**
**Eichenwall 3**
**D-2872 Hude 1(DE)**
Erfinder: **Gieseke, Reinhard**
**Eichenwall 4**
**D-2872 Hude 1(DE)**

(54) **Grubberschar.**

(57) Grubberschar, insbesondere für Tief- und/oder Vorgrubber, welches an einem Rahmen mittels einer Halterung jeweils befestigt ist, und einen aufrechten Haltestiel aufweist, an dessen unteren Ende sich seitlich abstehende Flügelschare befinden. Um vor allem für den Einsatz auf steinigen Böden ein Grubberschar zu schaffen, welches wesentlich unempfindlicher gegen Steine als das bekannte Grubberschar ist, ist vorgesehen, daß der Haltestiel jeweils aus zumindest zwei mit ihrer Breitseite aneinander anliegenden Blattfedern (14) besteht, welche an ihrem unteren Ende jeweils das etwa rechtwinklig abstehende Flügelschar (16) aufweisen, daß die Blattfedern (14) an ihrem unteren Ende von einer Klammer (17) zusammengefaßt werden.

FIG. 2

## Grubberschar

Die Erfindung betrifft ein Grubberschar gemäß Oberbegriff des Patentanspruches 1.

Ein derartiges Grubberschar ist bereits durch die DE-OS 33 25 911 bekannt. Dieses Grubberschar weist einen rechteckigen, starren Haltestiel für das zur Bodenlockerung dienende Werkzeug auf und ist mittels einer zweiteiligen Rohrschelle am Rahmen eines entsprechenden landwirtschaftlichen Bodenbearbeitungsgerätes befestigt. Der Haltestiel ist derart ausgebildet, daß sich an seinem unteren Teil ein Meißel und ein Werkzeughalter mit flügelförmigen Lockerungsscharen oder Blattscharen befindet.

Nachteilig ist bei diesem Haltestiel für das Grubberschar, daß der Haltestiel starr ausgebildet ist und es hierdurch beim Auftreffen der Grubberschare auf Steine sehr häufig zu Beschädigungen an den Werkzeugen oder sogar am Haltestiel selbst kommt.

Der Erfindung liegt daher die Aufgabe zugrunde, vor allem für den Einsatz auf steinigen Böden ein Grubberschar zu schaffen, welches wesentlich unempfindlicher gegen Steine als das bekannte Grubberschar ist.

Diese Aufgabe wird erfindungsgemäß dadurch gelöst, daß der Haltestiel jeweils aus zumindest zwei mit ihrer Breitseite aneinander anliegenden Blattfedern besteht, welche an ihrem unteren Ende jeweils das etwa rechtwinklig abstehende Flügelschar aufweisen, daß die Blattfedern an ihrem unteren Ende von einer Klammer zusammengefaßt werden.

Infolge dieser Maßnahmen wird dem Grubberschar eine derartige Eigenelastizität verliehen, so daß es auch beim Einsatz auf steinigen Böden nicht zu Beschädigungen an den Grubberscharen kommt, da sie den Steinen seitlich ausweichen können. Dadurch, daß die die Haltestiele bildenden Blattfedern an ihrem unteren Ende jeweils das etwa rechtwinklig abstehende Flügelschar aufweisen und die Blattfedern an ihrem unteren Ende von einer Klammer zusammengefaßt werden, läßt sich auf einfachste Weise ein Werkzeug für die Bodenlockerung herstellen.

In einer besonders bevorzugten Ausführungsform ist erfindungsgemäß vorgesehen, daß das Meißelstück sich an der Klammer befindet. Hierdurch läßt sich das Meißelstück nach evtuellem Verschleiß sehr einfach auswechseln.

Weiterhin ist erfindungsgemäß vorgesehen, daß die Flügelschare an der Blattfeder angeschweißt sind. Infolge dieser Maßnahme lassen sich die einem gewissen Verschleiß unterliegenden Flügelschare nach der Abnutzung schnell und einfach gegen neue Flügelschare ersetzen.

Eine besonders einfache Herstellung des Grubberschares wird erfindungsgemäß dadurch erreicht, daß die Flügelschare durch Umbiegen der Blattfedern an ihrem unteren Ende gebildet werden.

Zur Einstellung unterschiedlicher Arbeitsbreiten ist erfindungsgemäß vorgesehen, daß die Haltestiele in einer als Aufnahmehülse ausgebildeten Halterung höhenverstellbar an dem Grubberrahmen angeordnet sind.

Für extreme Bodenverhältnisse ist erfindungsgemäß vorge sehen, daß zusätzlich zu den zwei abgewinkelten Blattfedern mindestens eine gerade Blattfeder zur Verstärkung des senkrechten Bereiches verwendet wird.

Weitere Einzelheiten der Erfindung sind der Beispielsbeschreibung und den Zeichnungen zu entnehmen. Hierbei zeigt

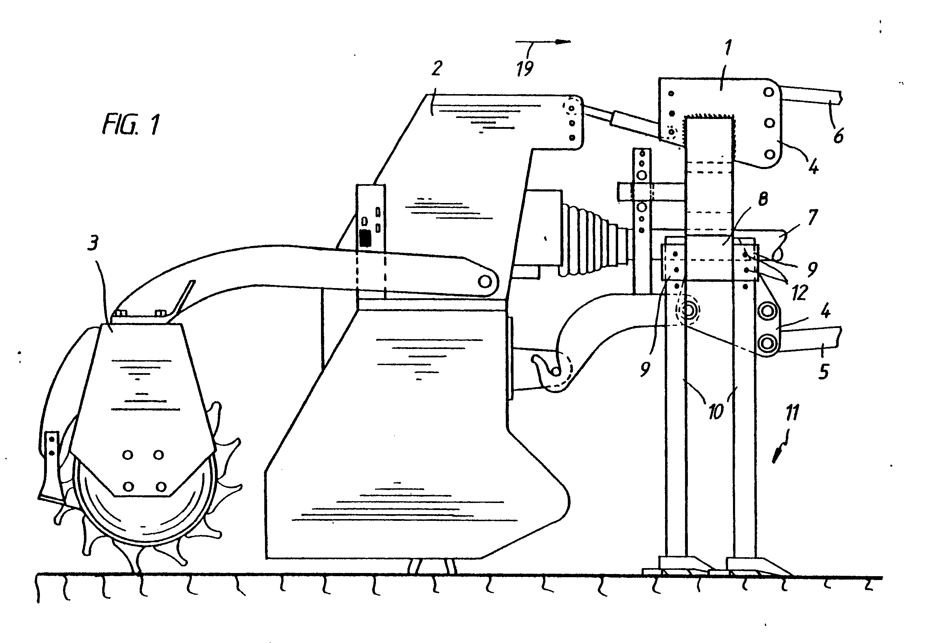

Fig. 1 eine landwirtschaftliche Bodenbearbeitungskombination bestehend aus Vorgrubber Kreiselegge und Nachlaufwalze, wobei die erfindungsgemäßen Grubberschare an dem Rahmen des Vorgrubbers befestigt sind,

Fig. 2 das in erfindungsgemäßer Weise ausgebildete Grubberschar in der Ansicht von vorne,

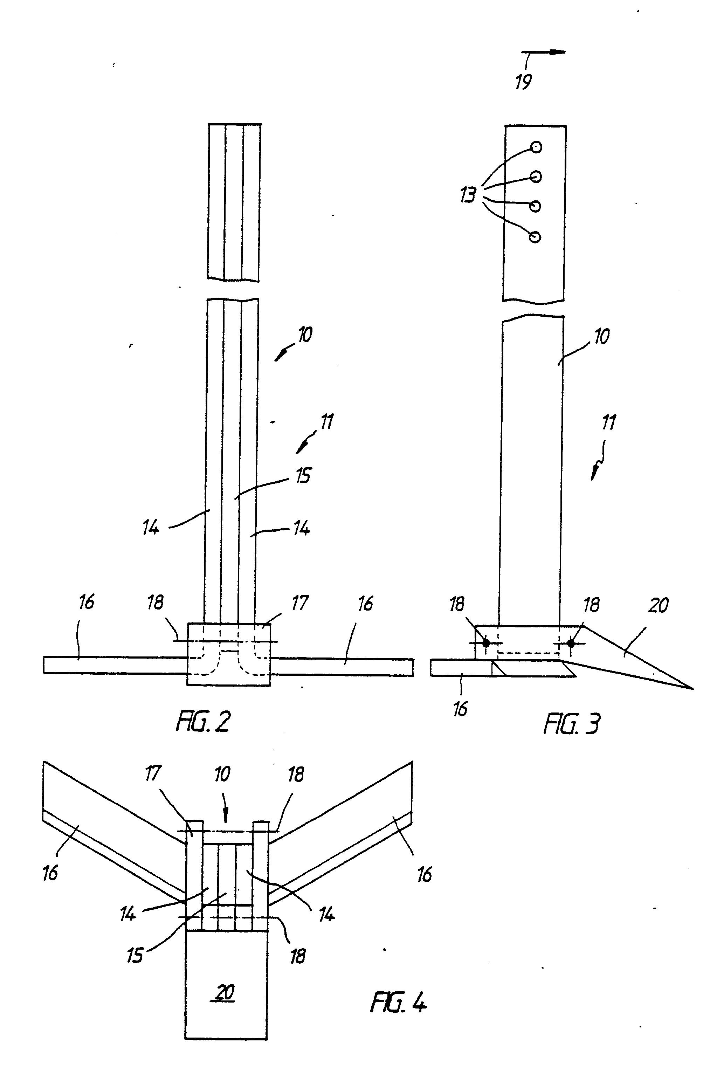

Fig.3 das erfindungsgemäße Grubberschar in der Seitenansicht und

Fig. 4 das erfindungsgemäße Grubberschar in der Draufsicht.

Die landwirtschaftliche Bodenbearbeitungskombination besteht aus dem Vorgrubber 1, der angetriebenen, als Kreiselegge ausgebildeten Bodenbearbeitungsmaschine 2 und der Nachlaufwalze 3. Über die Dreipunktkupplungselemente 4 des Vorgrubbers 1 ist die Bodenbearbeitungskombination mittels der Unterlenker 5 und dem Oberlenker 6 mit dem Dreipunktkraftheber eines die Bodenbearbeitungskombination transportierenden Ackerschleppers verbunden. Die Kreiselegge 2 wird mittels der Gelenkwelle 7 von der Zapfwelle des die Bodenbearbeitungskombination ziehenden Ackerschleppers angetrieben.

Der Vorgrubber 1 weist den Grubberrahmen 8 auf, an dem die als Aufnahmehülsen ausgebildeten Halterungen 9 für die Haltestiele 10 der Grubberschare 11 befestigt sind. Die Halterungen 9 weisen die Bohrungen 12 auf, in die Schrauben zur Befestigung der Haltestiele 10 eingesetzt werden. Die Haltestiele 10 weisen die Bohrungen 13 auf, so daß sie höhenverstellbar in den Halterungen 9 an dem Grubberrahmen 8 anbringbar sind.

Die Haltestiele 10 der Grubberschare 11 bestehen aus den beiden abgewinkelten Blattfedern 14 und der geraden Blattfeder 15. Diese Blattfedern 14 und 15 liegen jeweils mit ihrer Breitseite aneinander. An ihrem unteren Ende weisen die beiden abgewinkelten Blattfedern jeweils das rechtwinklig abstehende Flügelschar 16 auf. In ihrem unteren Bereich sind die Blattfedern 14 und 15 mittels der Klammer 37 zusammengefaßt, so daß ein komplettes Grubberschar entsteht. Mittels der Schraubverbindungen 18 werden die Blattfedern von der Klammer 17 zusammengedrückt. An ihrem vorderen, in Fahrtrichtung 19 weisenden Bereich weist die Klammer 17 das Meißelstück 20 auf.

## Ansprüche

1. Grubberschar, insbesondere für Tief- und/oder Vorgrubber, welches an einem Rahmen mittels einer Halterung jeweils befestigt ist, und einen aufrechten Haltestiel aufweist, an dessen unteren Ende sich seitlich abstehende Flügelschare befinden, dadurch gekennzeichnet, daß der Haltestiel jeweils aus zumindest zwei mit ihrer Breitseite aneinander anliegenden Blattfedern (14,15) besteht, welche an ihrem unteren Ende jeweils das etwa rechtwinklig abstehende Flügelschar (16) aufweisen, daß die Blattfedern (14,15) an ihrem unteren Ende von einer Klammer (17) zusammengefaßt werden.

2. Grubberschar nach Anspruch 1, wobei das Grubberschar ein nach vorn weisendes Meißelstück aufweist, dadurch gekennzeichnet, daß das Meißelstück (20) sich an der Klammer (17) befindet.

3. Grubberschar nach Anspruch 1, dadurch gekennzeichnet, daß die Flügelschare (16) an der Blattfeder (14) angeschweißt sind.

4. Grubberschar nach Anspruch 1, dadurch gekennzeichnet, daß die Flügelschare (16) durch Umbiegen der Blattfedern (14) an ihrem unteren Ende gebildet werden.

5. Grubberschar nach Anspruch 1, dadurch gekennzeichnet, daß die Haltestiele (10) in einer als Aufnahmehülse ausgebildeten Halterung (9) höhenverstellbar an dem Grubberrahmen (8) angeordnet sind.

6. Grubberschar nach Anspruch 1, dadurch gekennzeichnet, daß zusätzlich zu den zwei abgewinkelten Blattfedern (14) mindestens eine gerade Blattfeder (15) zur Verstärkung des senkrechten Bereiches verwendet wird.

FIG. 1

EP 0 386 629 A1

EP 0 386 629 A1

FIG. 2

FIG. 3

FIG. 4

Europäisches
Patentamt

**EUROPÄISCHER RECHERCHENBERICHT**

Nummer der Anmeldung

EP    90 10 3994

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-8385(1913) (E.W.BROWN) <br> * Seite 2, Zeile 45 - Seite 3, Zeile 25; Figuren 1-4 * | 1, 2. | A01B35/22 |
| Y | | 3, 4, 5. | |
| Y | US-A-1685268 (B.R.BENJAMIN) <br> * Spalte 1, Zeilen 36 - 55; Figuren 1-4 * <br> --- | 3, 4, 5. | |
| Y | US-A-3387668 (C.T.MATHERS) <br> * Spalte 2, Zeile 66 - Spalte 3, Zeile 10 * <br> * Spalte 3, Zeile 50 - Spalte 4, Zeile 7; Figuren 1, 2. * <br> --- | 1, 2, 4-6. | |
| Y | DE-C-481102 (G.ROTTBERG) <br> * Seite 1, Zeilen 40 - 78; Figuren 1, 2. * <br> --- | 1, 2, 4-6. | |
| A | GB-A-199954 (C.S.BIVAR) <br> * Seite 3, Zeilen 8 - 19; Figur 4 * <br> ----- | 3 | |

**RECHERCHIERTE SACHGEBIETE (Int. Cl.5)**

A01B

Der vorliegende Recherchenbericht wurde für alle Patentansprüche erstellt

| Recherchenort | Abschlußdatum der Recherche | Prüfer |
|---|---|---|
| DEN HAAG | 15 JUNI 1990 | WOHLRAPP R.G. |